# EUROPEAN PATENT APPLICATION

(11) **EP 2 487 940 A2**
(43) Date of publication of application: **15.08.2012**
(21) Application number: 11173941.3
(22) Date of filing: 14.07.2011
(51) Int. Cl.: H04W 4/06

(54) **Femtocell base station and initiative message broadcasting method thereof**

(30) Priority: 09.02.2011 TW 100104237
(71) Applicant: Askey Computer Corp., New Taipei City 235 (TW)
(72) Inventor: Chang, Huang-Chin, 238 New Taipei City (TW); Yeh, Yi-Ling, 238 New Taipei City (TW); Hsieh, Ching-Feng, 108 Taipei City (TW)
(74) Representative: Bonvicini, Davide

(57) **Abstract**

The disclosure provides a femtocell base station and an initiative message-broadcasting method thereof. When a mobile communication apparatus enters into the range of communications provided by the femtocell base station and establishes a stream of multimedia data communications of video call or video/audio packet-switch data, the detected multimedia data and the pre-stored broadcasting message are synthesized to be a sort of synthesized media data carrying the broadcasting message, or the broadcasting message can be used to intercept the multimedia data, and the synthesized media data or the broadcasting message are transmitted to the mobile communication apparatus and/or a core network apparatus, thereby resolving the problem that the messages cannot be broadcast instantly as encountered in prior techniques due to a central disposition and management of broadcasting messages provided by the telecommunications industry.

## Description

### FIELD OF THE INVENTION

The present invention relates generally to a femtocell base station, and more particularly, to a femtocell base station and an initiative message-broadcasting method thereof.

### BACKGROUND OF THE INVENTION

Compared to the increasing of high building intensity and mobile communication users within the building, the indoor area may be a low-coverage network area. Thus, a so-called femtocell base station (also known as femto base station or cellular pico base station) has emerged. The femtocell base station extends the range of the mobile communication network, which resolves the problem of the aforementioned low-coverage network area for indoor areas.

In practical applications, when a mobile communication apparatus enters into a communication area covered by a femtocell base station and detects the signal quality of the communication area that is well enough for the mobile communication apparatus to reside therein, the mobile communication apparatus will attempt to issue a processing request for residing in the communication area. At the time the femtocell base station authorized residence for the mobile communication apparatus, the mobile communication apparatus may execute the required operations provided by a core network apparatus through the femtocell base station. For example, the mobile communication apparatus user makes a video call to other users through an interactive video platform built by the core network apparatus and the femtocell base station. Alternatively, the mobile communication apparatus user may watch the video/audio data through the core network apparatus and the femtocell base station finding streaming data from the core network apparatus.

However, the two operations provided by the conventional femtocell base station are unable to take the initiative to broadcast messages. In other words, the mobile communication apparatus users are not able to get the instant broadcasting message instantly within the communication area covered by the ongoing interaction femtocell base station.

To resolve the foregoing problems, presently telecommunications industry adopts to default a variety of broadcasting messages at the server side (server room) for a central management, and then assigne to the femtocell base station within the area through the core network apparatus. The femtocell base station provides to the mobile communication apparatus user within the communication area. However, the application of the central disposition and management of broadcasting messages provided by the telecommunications industry is extremely inconvenient and inflexible. For example, users with the needs of adding, changing or updating the contents of the broadcasting messages according to their real situation need to apply to the communications industry and wait for approval before they can broadcast, while the procedures are cumbersome and long time-consuming, and do not meet the timely characteristics of broadcasting message. Moreover, when many demands of broadcasting messages instantly are proposed, workload of the server room may be increased. As a result, additional server equipment is necessary, and operating costs of the telecommunications industry are thus increased.

### SUMMARY OF THE INVENTION

In view of the above- mentioned disadvantages of the prior techniques, an object of the present invention is to provide a femtocell base station and an initiative message-broadcasting method thereof, so as to resolve the problem that the messages cannot be broadcast instantly due to a central disposition and management of broadcasting messages provided by the telecommunications industry.

To achieve this object and other objects, the present invention provides a femtocell base station applicable to a communication network built by a core network apparatus and a mobile communication apparatus, said femtocell base station comprising: a storing module for pre-storing a broadcasting message; a detecting module for issuing an extracting request upon detecting said mobile communication apparatus entering into a range of communications provided by said femtocell base station and establishing a stream of multimedia data communications of video call or video/audio packet-switch data, said detecting module implementing a detecting procedure based on multimedia data acquired or issued by said mobile communication apparatus establishing said multimedia data communications; an extracting module for extracting and outputting said pre-stored broadcasting message upon receiving said extracting request issued by said detecting module; and a processing module for receiving said broadcasting message outputted by said extracting module, extracting said multimedia data detected by said detecting module, synthesizing said multimedia data and said broadcasting message into a synthesized media data carrying said broadcasting message or intercepting said multimedia data by the broadcasting message, and transmitting said synthesized media data or said broadcasting message to at least one of said mobile communication apparatus and said core network apparatus.

The present invention also provides an initiative message broadcasting method for a femtocell base station applicable to a communication network built by a core network apparatus, said femtocell base station and a mobile communication apparatus, said method comprising: pre-storing a broadcasting message; extracting said pre-stored broadcasting message upon detecting a mobile communication apparatus entering into a range of communications provided by said femtocell base station and establishing a stream of multimedia data communications of video call or video/audio packet-switch data; and synthesizing said multimedia data acquired or issued by said mobile communication apparatus establishing said multimedia data communications with said extracted broadcasting message into a synthesized media data carrying said broadcasting message or intercepting said multimedia data by said broadcasting message, and transmitting said synthesized media data or said broadcasting message to at least one of said mobile communication apparatus and said core network apparatus.

As noted above, the present invention provides a femtocell base station and an initiative message-broadcasting method thereof, characterized in that, after the stream of multimedia data of video call or video/audio packet-switch data in communications established by the mobile communication apparatus and the femtocell base station and the pre-stored broadcasting message are synthesized into synthesized media data that carries the broadcasting message, or the broadcasting message can be used to intercept the multimedia data, the synthesized media data and the broadcasting message may be transmitted to the mobile communication apparatus and/or the core network apparatus, thereby achieving initiative message broadcasting to the mobile communication apparatus and/or core network apparatus by the femtocell base station, without further transmitting broadcasting message through the server side of the communications industry. Thus, increasing of workload of the server room of the telecommunications industry can be eliminated, at the same time the timely characteristics of broadcasting message can be met. Moreover, the broadcasting message may be appropriately set according to area features or staff needs of the region of every femtocell base station, so that the content of the broadcasting message is highly specificated.

### BRIEF DESCRIPTION OF THE DRAWINGS

FIG 1A and FIG 1B are schematic block diagrams of two application architectures of a femtocell base station with a femtocell gateway of an embodiment according to the present invention;

FIG 2A and FIG 2B are schematic block diagrams of two application architectures of a femtocell base station without a femtocell gateway of an embodiment according to the present invention;

FIG 3 is a schematic flow chart of an initiative message broadcasting method of a femtocell base station of an embodiment according to the present invention; and

FIG 4 is an example of a screen of a femtocell base station during message-broadcasting to a mobile communication apparatus.

### DETAILED DESCRIPTION OF THE PREFERRED EMBODIMENTS

The following illustrative embodiments are provided to illustrate the disclosure of the present invention, these and other advantages and effects can be apparently understood by those in the art after reading the disclosure of this specification. The present invention can also be performed or applied by other different embodiments. The details of the specification may be on the basis of different points and applications, and numerous modifications and variations can be devised without departing from the spirit of the present invention.

Furthermore, the invention of the instructions are simplified schematic diagram, the only way to indicate that the basic technical idea of the invention, so the actual implementation of each component type, quantity and proportion of visual implementation of the requirements change.

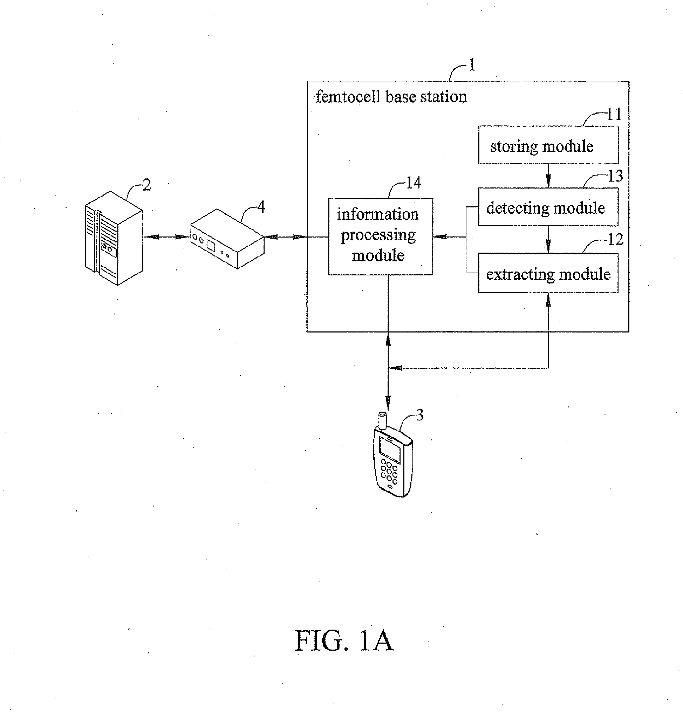

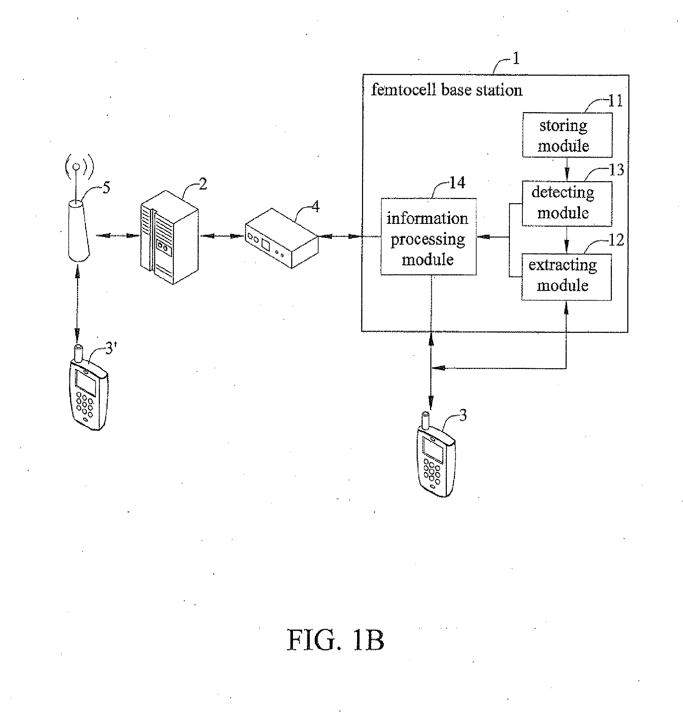

Referring to FIG 1A and FIG 1B, schematic block diagrams of two different application architectures of a femtocell base station of an embodiment according to the present invention are shown. The application architecture of FIG 1A refers to the accessing multimedia data communications of a mobile communication apparatus 3 that is back and forth under femtocells system, while the application architecture of FIG 1B refers to the accessing multimedia data communications of the mobile communication apparatus 3 that is back and forth under a femtocell system and a macro cell system.

As shown in FIG. 1A and FIG 1B, a femtocell base station 1 is applicable to a communication network built by a core network apparatus 2 and the mobile communication apparatus 3. In this embodiment, the femtocell base station 1 includes an IUH interface, which is an interface between a femtocell base station and a femtocell gateway. The communication network also includes femtocell gateways 4 for increasing the number of the femtocell base stations 1 that are permitted to access the area the core network apparatus 2. Therefore, more users of the mobile communication apparatus 3 are allowed to easily access to the wireless operation services provided by the femtocell base stations 1. For example, the user of the mobile communication apparatus 3 makes a video call with other users using the femtocell base station 1. Alternatively, the user of the mobile communication apparatus 3 using a streaming service of video/audio packet-switch data , such as browsing video/audio media data, downloaded from the core network apparatus 2 through using the femtocell base station 1. In the following descriptions of preferred embodiments, data type of the multimedia data communications built by the mobile communication apparatus 3 and the femtocell base station 1 will be described with an example of the video call and the streaming service of video/audio packet-switch data.

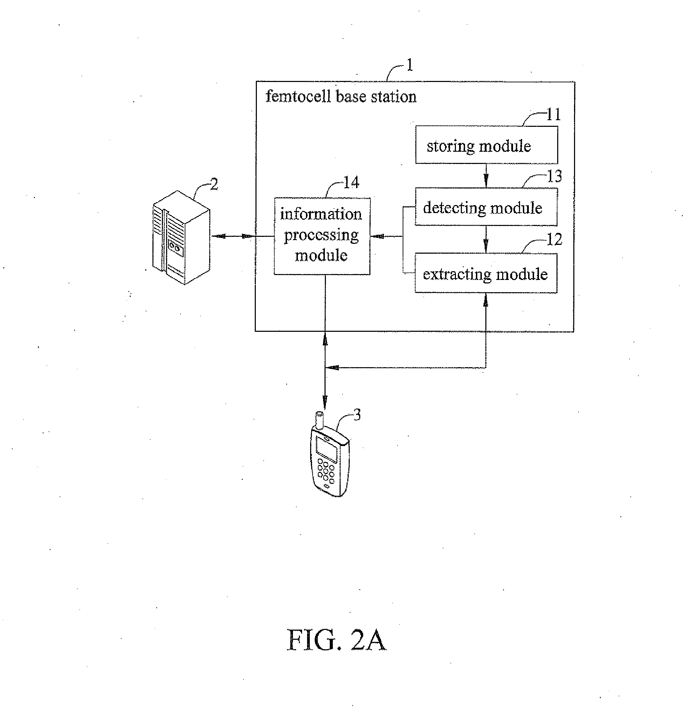

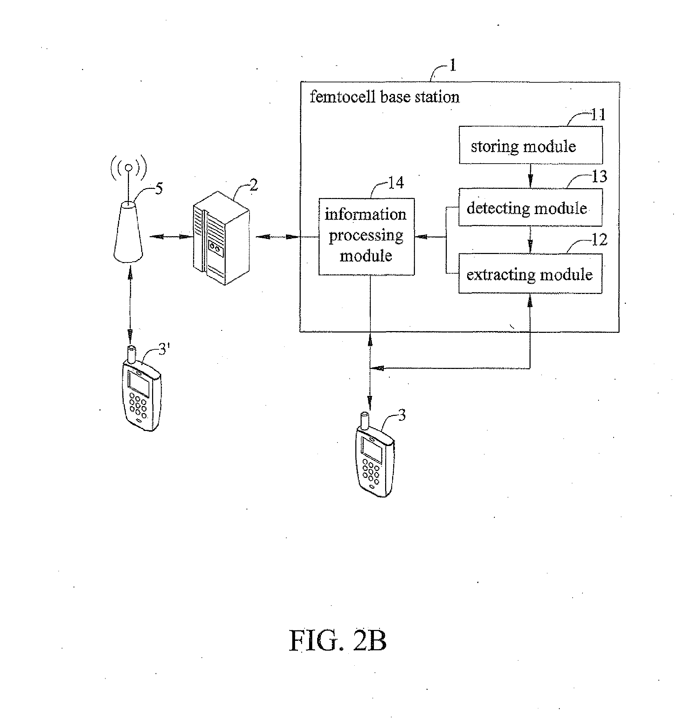

It is to be noted that the user of the femtocell base station 1 may adopt a different network architecture if he does not plan to access more femtocell base station within the area of the same core network apparatus 2. Referring to FIG 2A and FIG 2B, schematic block diagrams of two different application architectures of a femtocell base station of an embodiment according to the present invention are shown. The application architecture of FIG 2A refers to the accessing multimedia data communications of a mobile communication apparatus 3 that is back and forth under femtocells system, while the application architecture of FIG 2B refers to the accessing multimedia data communications of a mobile communication apparatus 3 that is back and forth under a femtocell system and a macro cell system.

As shown in FIG 2A and FIG 2B, the femtocell base station 1 is a femtocell base station with an IU interface. Such femtocell base station may interconnect directly with the core network apparatus 2 without the femtocell gateway 4 in order to enable the signal interaction.

The IU interface as well as the IUH interface is standard of the femtocell base station. The following description will be described with reference to the network architecture shown in FIG 1A and FIG 1B. The femtocel base station 1 at least includes a storing module 11, a detecting module 13, an extracting module 12, and an information processing module 14.

The storing module 11 is used for pre-storing a broadcasting message. The storing module 11 is not limited to be built in the femtocell base station 1, as shown in the figure. To meet different architecture demands, the storing module 11 may be a network drive, an external hard drive, or a flash drive. In this embodiment, the storing module 11 may be a hard drive or a memory built in the femtocell base station 1. The femto cell owner may connect to the femtocell base station 1 through Internet equipment (e.g., a computer) or the mobile communication apparatus 3 for writing or updating broadcasting messages directly to the storage module 11. The broadcasting messages may be a file of text, image, audio, multimedia data, or the like.

The detecting module 13 is used for issuing an extracting request upon detecting that a mobile communication apparatus 3 enters into a range of communications provided by the femtocell base station 1 and establishes a stream of multimedia data communications of video call or video/audio packet-switch data. The detecting module 13 implements a detecting procedure based on multimedia data acquired or issued by the mobile communication apparatus 3 established in the multimedia data communications.

The extracting module 12 is connected to the detecting module 13 and the storage module 11, and extracts and outputs the pre-stored broadcasting message from the storage module 11 upon receiving the extracting request issued by the extracting module 12.

The information processing module 14 is connected to the detecting module 13and the extracting module 12. After receiving the broadcasting message outputted by the extracting module 12, the information processing module 14 extracts the multimedia data detected by the detecting module 13, and synthesizes the multimedia data and the broadcasting message into a synthesized media data carrying the broadcasting message, or intercepts the multimedia data that is ready to be transmitted to or from the mobile communication apparatus 3. The information processing module 14 transmits the synthesized media data or the broadcasting message to the mobile communication apparatus 3 and/or the core network apparatus 2.

As shown in FIG 1A, when the user of the mobile communication apparatus 3 with a download need downloads the streaming data of video/audio packet-switch data from the core network apparatus 2 through using the femtocell base station 1 for browsing video/audio data, the detecting module 13 detects the mobile communication apparatus 3 and the femtocell base station 1 establishes a stream of video/audio packet-switch data as a type of multimedia data communications and then issues an extracting request. The extracting module 12 extracts the pre-stored broadcasting message from the storage module 11, and outputs to the information processing module 14. The information processing module 14 extracts the multimedia data, and synthesizes the multimedia data and the broadcasting message into a synthesized media data carrying the broadcasting message or intercepts the multimedia data ready to be transmitted to or from the mobile communication apparatus 3 with the broadcasting message. The information processing module 14 transmits the synthesized media data or the broadcasting message to the mobile communication apparatus 3.

As shown in FIG. 1B, when the user of the mobile communication apparatus 3 entering into a range of communications provided by the femtocell base station 1, with a transmission need, makes a video call with other users of another mobile communication apparatus 3' within the range of communications provided by the macro cell base station 5, the detecting module 13 detects the mobile communication apparatus 3 and the femtocell base station 1 makes a video call as a type of multimedia data communications and then issues an extracting request. The extracting module 12 extracts the pre-stored broadcasting message from the storage module 11 and outputs to the information processing module 14. The information processing module 14 extracts the multimedia data, and synthesizes the multimedia data and the broadcasting message into a synthesized media data carrying the broadcasting message or intercepts the multimedia data ready to be transmitted to or from the mobile communication apparatus 3 with the broadcasting message. The information processing module 14 transmits the synthesized media data or the broadcasting message to the mobile communication apparatus 3. Alternatively, the synthesized media data or the broadcasting message is sent to the core network apparatus 2, and the core network apparatus 2 transfers the synthesized media data or the broadcasting message to other users of another mobile communication apparatus 3' through the macro cell base station 5.

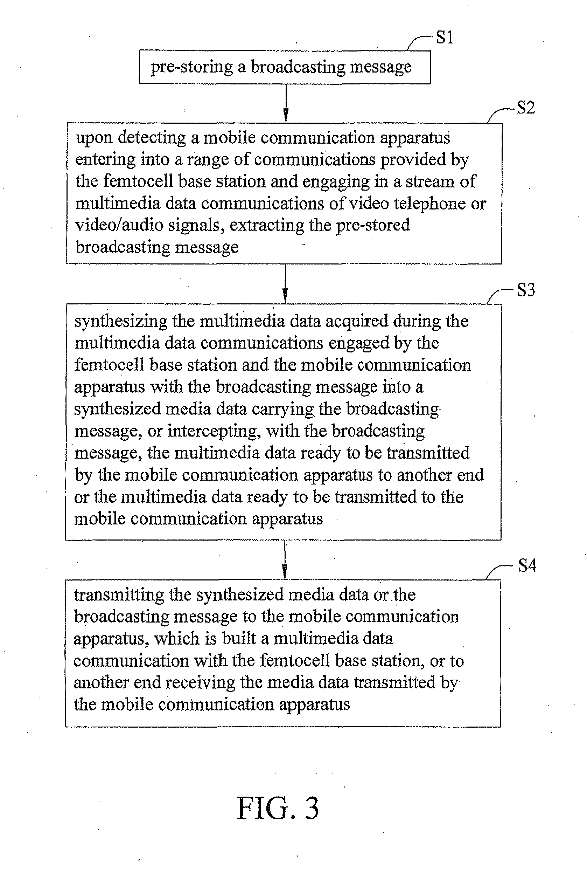

With reference to FIG. 1A and FIG 1B, an initiative message broadcasting method for a femtocell base station will now be described. As shown in FIG 3, the initiative message broadcasting method for the femtocell base station is suitable for a communication network built by a core network apparatus and a mobile communication apparatus. When the mobile communication apparatus enters into the range of communications provided by the femtocell base station and establishes the multimedia data communications, the femtocell base station takes the initiative message broadcasting to the mobile communication apparatus and/or core network apparatus.

In this embodiment, the femtocell base station of the present invention is a femtocell base station with an IUH interface or an IU interface. In step S1, a broadcasting message is pre-stored. Proceed to step S2. To meet different implementation needs, the broadcasting message may be pre-stored in a storing module, such as a network drive, an external hard drive, a flash drive, a hard drive, or a memory built in the femtocell base station. The storing module for pre-storing a broadcasting message is read by the femtocell base station. In addition, the storage module is controlled by a control program. The control program provides a user interface, in addition to pre-storing a broadcasting message, for providing the user to input the broadcasting message through the user interface. The control program may be pre-installed in the memory of the femtocell base station or a storage device connected to the femtocell base station. In an embodiment of the present invention, the storage device may be a network drive, an external hard drive, a flash drive or the like.

In step S2, upon detecting a mobile communication apparatus entering into a range of communications provided by the femtocell base station and accessing a stream of multimedia data communications of video call or video/audio packet-switch data, the pre-stored broadcasting message is extracted. Proceed to step S3. The multimedia data communications may include the download of the streaming data of video/audio packet-switch data of the mobile communication apparatus 3 from the core network apparatus through the femtocell base station for browsing video/audio data or making a video call by the user of the mobile communication apparatus with users at another end through the femtocell base station and the core network apparatus.

In step S3, the multimedia data, such as the video call or the streaming data of video/audio packet-switch data, acquired during the multimedia data communications established by the femtocell base station and the mobile communication apparatus is synthesized with the broadcasting message into a synthesized media data carrying the broadcasting message, or the multimedia data that is ready to be transmitted to the mobile communication apparatus or transmitted by the mobile communication apparatus to another end is intercepted by the broadcasting message.

In step S4, the synthesized media data or the broadcasting message is transmitted to the mobile communication apparatus, which is built a multimedia data communication with the femtocell base station, or is transmitted to another end receiving the media data transmitted by the mobile communication apparatus.

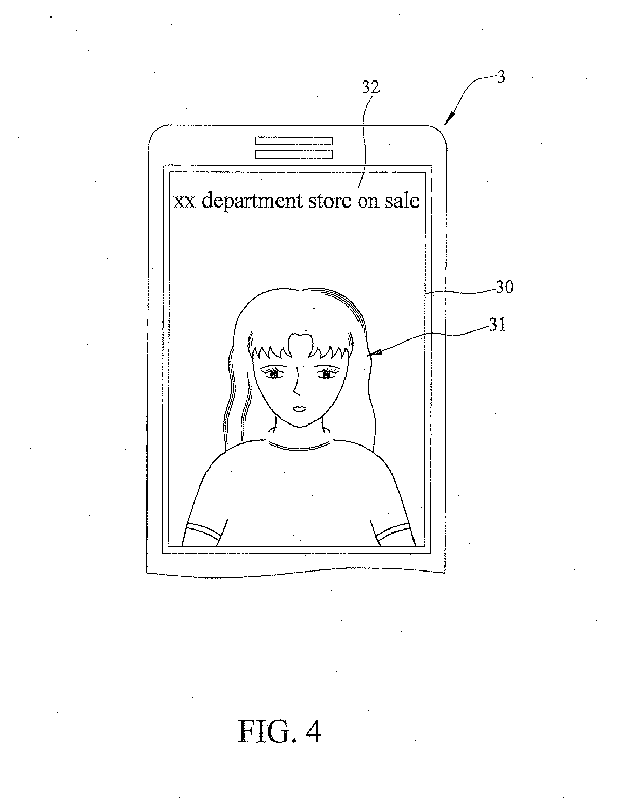

As shown in FIG 4, with reference to FIG. 1B, an example of the contents on the screen for a femtocell base station broadcasting message to a mobile communication apparatus will be described.

When the user of the mobile communication apparatus 3' within the range of communications of the macro cell base station 5 establishes a video call with the mobile communication apparatus 3 within the range of communications of the femtocell base station 1, the mobile communication apparatus 3' establishes the media data communication with the mobile communication apparatus 3 through the macro cell base station 5, the core network apparatus 2, the femtocell gateway 4 and the femtocell base station 1. The femtocell base station 1 processes the multimedia data communications between the mobile communication apparatus 3' and the mobile communication apparatus 3 by extracting the pre-stored broadcasting message. The mobile communication apparatus 3' and the mobile communication apparatus 3, when receiving data of the video call with each other, also receive the broadcasting message. As shown in FIG 4, on the screen 30 of the mobile communication apparatus 3 the user images 31 of the mobile communication apparatus 3', and the broadcasting messages 32 as well, are displayed. In this example, the femtocell base station 1 may be located near the xx department store, or even located in the building of the xx department store, and business people of the xx department store may therefore set broadcasting messages for reading by the femtocell base station 1 according to their business needs. Therefore, every mobile communication apparatus of the multimedia data communications service established by the femtocell base station 1 may obtain the specific broadcasting messages of the femtocell base station 1. Compared to existing message broadcasting mechanism, the present invention also provides broadcasting message with specificity.

In summary, the femtocell base station and the initiative message-broadcasting method of the present invention are characterized in that the multimedia data of the multimedia data communications established by the mobile communication apparatus and the femtocell base station and the pre-stored broadcasting message are synthesized to be a sort of synthesized media data carrying the broadcasting message, or the broadcasting message can be used to intercept the multimedia data, and the synthesized media data or the broadcasting message is transmitted to the mobile communication apparatus and/or a core network apparatus, thereby initiative message broadcasting to the mobile communication apparatus and/or the core network apparatus by the femtocell base station can be achieved, without further transmitting broadcasting messages through the server side of the communications industry, and resolving the problem of not being able to broadcast messages instantly due to a central disposition and management of broadcasting messages provided by the telecommunications industry. Moreover, the broadcasting message may be appropriately set according to area features or staff needs of the region of every femtocell base station, so that the content of the broadcasting message is highly specificated.

While the invention has been described in terms of what are presently considered to be the most practical and preferred embodiments, it is to be understood that the invention need not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A femtocell base station applicable to a communication network built by a core network apparatus and a mobile communication apparatus, said femtocell base station comprising:
a storing module for pre-storing a broadcasting message;
a detecting module for issuing an extracting request upon detecting said mobile communication apparatus entering into a range of communications provided by said femtocell base station and establishing a stream of multimedia data communications of video call or video/audio packet-switch data, said detecting module implementing a detecting procedure based on multimedia data acquired or issued by said mobile communication apparatus establishing said multimedia data communications;
an extracting module for extracting and outputting said pre-stored broadcasting message upon receiving said extracting request issued by said detecting module; and
a processing module for receiving said broadcasting message outputted by said extracting module, extracting said multimedia data detected by said detecting module, synthesizing said multimedia data and said broadcasting message into a synthesized media data carrying said broadcasting message or intercepting said multimedia data by said broadcasting message, and transmitting said synthesized media data or said broadcasting message to at least one of said mobile communication apparatus and said core network apparatus.

2. The femtocell base station according to claim 1, wherein said storing module is a hard drive or a memory.

3. The femtocell base station according to claim 1, wherein said storing module is a network drive, an external hard drive or a flash drive.

4. The femtocell base station according to claim 1, wherein said broadcast message is a file of text, image, audio or multimedia data.

5. The femtocell base station according to claim 1, being with an IUH interface or an IU interface.

6. An initiative message broadcasting method for a femtocell base station applicable to a communication network built by a core network apparatus, the femtocell base station and a mobile communication apparatus, said method comprising:
pre-storing a broadcasting message;
extracting said pre-stored broadcasting message upon detecting said mobile communication apparatus entering into a range of communications provided by said femtocell base station and establishing a stream of multimedia data communications of video call or video/audio packet-switch data; and
synthesizing said multimedia data acquired or issued by said mobile communication apparatus establishing said multimedia data communications with said extracted broadcasting message into a synthesized media data carrying said broadcasting message or intercepting said multimedia data by said broadcasting message, and transmitting said synthesized media data or said broadcasting message to at least one of said mobile communication apparatus and said core network apparatus.

7. The initiative message broadcasting method according to claim 6, wherein said broadcasting message is pre-stored in a network drive, an external hard drive, a flash drive, a hard drive, or a memory within said femtocell base station.

8. The initiative message broadcasting method according to claim 6, wherein said broadcast message is a file of text, image, voice or multimedia data.

9. The initiative message broadcasting method according to claim 6, wherein said femtocell base station is a femtocell base station with an IUH interface or a femtocell base station with an IU interface.
